# EUROPÄISCHE PATENTSCHRIFT

(11) **EP 2 489 845 B1**
(45) Veröffentlichungstag und Bekanntmachung des Hinweises auf die Patenterteilung: **18.02.2015**
(21) Anmeldenummer: 11191795.1
(22) Anmeldetag: 02.12.2011
(51) Int. Cl.: F01N 3/20, B01D 35/30

(54) **SCR-Abgasnachbehandlungseinrichtung**
SCR device for exhaust after treatment
dispositif SCR de post-traitement des gaz d'échappement

(30) Priorität: 14.12.2010 DE 102010061222
(43) Veröffentlichungstag der Anmeldung: 22.08.2012
(73) Patentinhaber: Cummins Ltd., Middlesex, TW18 2BD (GB)
(72) Erfinder: Zapf, Friedrich, 97753 Karlstadt (DE); Lannig, Andreas, 97892 Kreuzwertheim (DE); Weidner, Sebastian, 97836 Oberndorf (DE); Fuchs, Tobias, 88400 Biberach (DE); Rohrmüller, Ralph, 97906 Faulbach (DE)
(74) Vertreter: Beyer, Andreas

(56) Entgegenhaltungen:
- EP-A1- 1 360 983
- EP-A1- 2 014 886

## Beschreibung

Die Erfindung betrifft eine SCR-Abgasnachbehandlungseinrichtung gemäß dem einteiligen Patentanspruch 1.

Aus der DE 10 2008 012 780 A1 ist bereits eine SCR-Abgasnachbehandlungseinrichtung bekannt. Bei dieser wird in Übereinstimmung mit der Erfindung eine Harnstoff-Wasser-Lösung in einen Abgasstrang eingespritzt. Zur Herstellung des dafür notwendigen Druckes ist eine Pumpeinheit mit einem Druckfilter vorgesehen. Dieser Druckfilter liegt dabei im Bereich eines Innenraumes der Pumpeinheit. Ebenfalls an der Pumpeinheit angeordnet ist ein komprimierbares Ausgleichselement. Dieses Ausgleichselement liegt jedoch nicht im Bereich des Druckfilters.

Die Harnstoff-Wasser-Lösung wird im folgenden kurz als HWL bezeichnet.

Überdies sind aus der DE 102 20 662 B4 und der DE 102 20 672 Filter für eine HWL bekannt. Diese Filter sind konstruktiv für die Ausdehnung beim Einfrieren der HWL ausgelegt.

Die DE 103 62 140 B4 betrifft ein Dehnteil aus einem elastomeren Werkstoff, das nachgibt, wenn sich einfrierende HWL ausdehnt.

Die EP 1 236 499 A1 betrifft eine druckluftunterstützte SCR-Abgasnachbehandlungseinrichtung mit einem Membran-Speichertank. Der Membran-Speichertank besteht aus einer Tankschale, die innenseitig mit einer Schaumschicht belegt ist. Innerhalb der Tankschale bzw. der Schaumschicht ist eine Speicherblase aus einer undurchlässigen flexiblen Membran vorgesehen, in der ein Reduktionsfluid - wie beispielsweise HWL - aufgenommen wird.

Die DE 10 2008 054 803 A1 betrifft einen Tank für HWL, an dessen Innenwand Schaumstücke aus EPDM vorgesehen sind, die kompressibel sind. Damit wird eine Einfriersicherung erreicht.

Die DE 31 25 463 A 1 zeigt einen Latentwärmespeicher als starren Behälter. Dieser ist beispielhaft aus Beton ausgeführt und speichert Wasser. Um Ausdehnungen infolge Einfrierens des Wassers aufzunehmen, sind mit Luft gefüllte Gummischläuche innerhalb Latentwärmespeichers angeordnet.

Die US 6,119,729 betrifft Leitungen für sich beim Einfrieren ausdehnende wässrige Flüssigkeiten. Um den Volumenzuwachs beim Ausdehnen aufnehmen zu können, ist in der Leitung neben einem Flüssigkeitskanal noch ein kompressibles Elastomerelement vorgesehen.

Die EP 2 014 886 A1 offenbart einen Behälter für ein Flüssigkeitsdosiersystem. Der Behälter weist einen äußeren und einen inneren Behälter bzw. ein flexibles Element auf. Der äußere Container ist an seiner Innenseite mit einer Isolierung versehen. In dem Behälter kann ferner eine ECU oder eine Dosiereinheit vorgesehen sein. Das flexible Element und die Isolierung des äußeren Containers sind durch einen Zwischenraum voneinander beabstandet. Der flexible Container ist kontrahierbar und enthält eine Flüssigkeit.

Aufgabe der Erfindung ist es, in Innenräumen einer SCR-Abgasnachbehandlungseinrichtung angeordnete Komponenten mit HWL über einen sehr langen Zeitraum bei einer hohen Anzahl von Gefrierzyklen vor Einfrierschäden zu schützen.

Dazu ist ein Frostausgleichsschaum vorgesehen, dessen Oberfläche vor dem Eindringen von HWL durch eine Elastomermembran geschützt ist. Es hat sich herausgestellt, dass HWL über lange Zeit selbst geschlossenporige Schäume zerstören kann, da die scharfkantigen Harnstoffkristalle nach mehreren Einfrierzyklen die dünnen Schaumwände einreißen können. Dann dringt HWL in den Innenraum einer solchen Schaumblase ein, dehnt sich beim Einfrieren aus, so dass nach und nach der Schaum bei der Vielzahl der Einfrierzyklen zerstört wird. Die erfindungsgemäße Elastomermembran ist jedoch so dick ausgelegt, dass die Harnstoffkristalle diese nicht durchdringen können. Somit kann auch keine HWL in eine Schaumblase eindringen.

In besonders vorteilhafter Weise wird erfindungsgemäß ein größerer konstruktiver Gestaltungsspielraum bei dem Frostausgleichsschaum erreicht. Es kann sogar ein offenporiger Schaum Verwendung finden, der nach anderen konstruktiven, preislichen oder fertigungstechnischen Anforderungen ausgelegt sein kann. Verarbeitbarkeit ist beispielsweise eine solche Anforderung. Insbesondere kann aber auch ein Material gewählt werden, das seine Elastizität über eine lange Lebensdauer aufrecht erhält. Auch muss der Schaum nicht beständig gegenüber der sehr aggressiven und kriechfähigen HWL sein.

In einer besonders vorteilhaften Ausgestaltung der Erfindung ist die Elastomermembran gemeinsam mit dem Frostausgleichsschaum so steif ausgelegt, dass bis zu einem Druck von 10 bar einen Volumenverringerung größer 10% verhindert wird.

In besonders vorteilhafter Weise kann ein Belüftungselement vorgesehen sein. Mit diesem Belüftungselement kann ein über eine lange Betriebszeit auftretender Luftverlust ausgeglichen werden. Dieses Belüftungselement ist in besonders vorteilhafter Weise luft-und dampfdurchlässig mit dem umgebenden atmosphärischen Druck verbunden. Hingegen ist es nicht flüssigkeitsdurchlässig.

Patentanspruch 6 zeigt eine besonders vorteilhafte Ausgestaltung, bei welcher die zu schützende Komponente ein Filterelement ist, dessen innerer Totraum mit einem Zapfen aufgefüllt ist, so dass das Volumen der einfrierenden HWL und damit auch deren Volumenzuwachs gering gehalten wird.

Weitere Vorteile der Erfindung gehen aus den weiteren Patentansprüchen, der Beschreibung und der Zeichnung hervor.

Die Erfindung ist nachfolgend anhand eines Ausführungsbeispiels erläutert.

In der Zeichnung zeigen:
Fig. 1 schematisch eine Abgasnachbehandlungseinrichtung mit einem gegen Einfrieren gesicherten Druckfilter,
Fig. 2 den Druckfilter aus Fig. 1 in einem Detail.

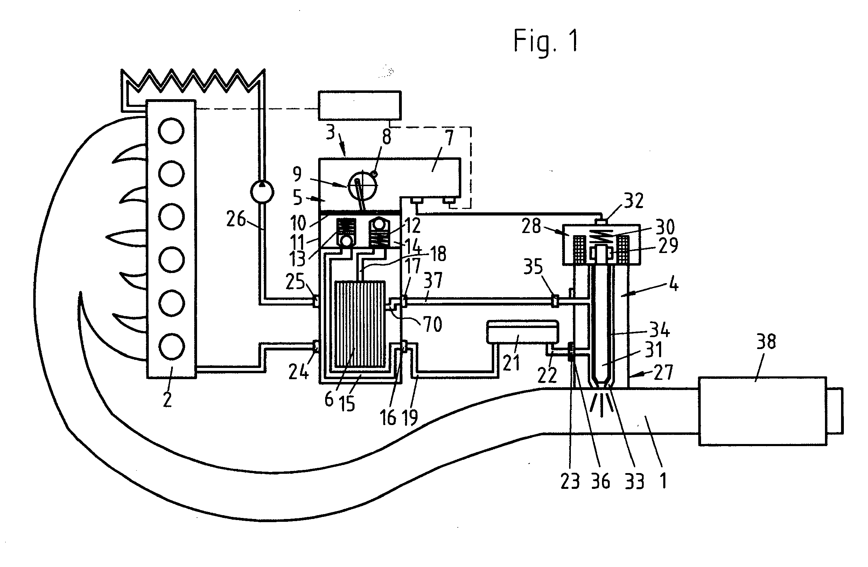

Fig. 1 zeigt schematisch eine Abgasnachbehandlungseinrichtung, mit welcher eine HWL in einen Abgasstrom 1 eines Dieselmotors 2 eingespritzt wird. Die Abgasnachbehandlungseinrichtung weist dabei eine Pumpeinheit 3 auf, welche die HWL ansaugt und diese HWL unter Druck setzt und sie unter Druck an eine Dosiereinheit 4 weiterleitet, welche einen Teil der HWL in den heißen Abgasstrom 1 einspritzt. Außerdem wird die Dosiereinheit 4 von der im Kreislauf zwischen der Pumpeinheit 3 und der Dosiereinheit 4 umlaufenden HWL gekühlt.

Die Pumpeinheit 3 umfasst eine Pumpe 5, einen Druckfilter 6 und eine Steuerungseinheit 7.

Die Pumpe 5 ist als Membranpumpe ausgeführt und umfasst einen bürstenlosen Elektromotor 8 mit einem ähnlich einem Kurbeltrieb arbeitenden Excentergetriebe 9. Dieses Excentergetriebe 9 bewegt den mittigen Bereich einer Membran 10 hin und her, welche an deren Umfang in einem Gehäuse 11 eingespannt ist. In diesem Gehäuse 11 sind außerdem zwei Rückschlagventile 12, 13 eingesetzt. Das eine Rückschlagventil 12 öffnet in die eine Richtung, so dass ein von der Membran 10 unter Druck setzbarer Druckraum 14 unter Druck stehende HWL abgeben kann. Das andere Rückschlagventil 13 öffnet in die entgegen gesetzte Richtung, so dass der Druckraum 14 HWL ansaugen kann. Von jedem Rückschlagventil 12, 13 geht ein eigener in das Gehäuse 11 eingearbeiteter Kanal ab. Das HWL ansaugende Rückschlagventil 13 saugt die HWL über einen Saugkanal 15 von einem HWL-Sauganschluss 16 an.

Aus dem Druckraum 14 wird die HWL von der Membran 10 über das andere Rückschlagventil 12 und den von diesem abgehenden Druckkanal 18 zu dem Druckfilter 6 geleitet.

In der Zeichnung nicht dargestellt ist, dass vom Druckkanal 18 eine Bohrung im Gehäuse 11 abgeht, in die ein Druckbegrenzungsventil eingepresst ist. Dieses Druckbegrenzungsventil öffnet bei einem Grenzdruck und leitet die HWL zu einem Abströmkanal, der die HWL wieder in den Saugkanal 15 einspeist. Um die sehr kriechfähige HWL mit Sicherheit davon abzuhalten, in die Umwelt zu gelangen, ist zum einen ein Dichtring am Druckbegrenzungsventil vorgesehen. Zum anderen verschließt ein zusätzlicher Deckel die Bohrung für das Druckbegrenzungsventil, der eine zusätzliche Dichtungsmaßnahme gegenüber dem Gehäuse 11 aufweist.

Von dem Druckfilter 6 wird die HWL zu einem HWL-Druckanschluss 17 geleitet. Mit diesem Druckfilter 6 wird die Dosiereinheit 4 vor Schmutzpartikeln und damit vor Verstopfung geschützt. Der dem Druckfilter 6 folgende HWL-Druckanschluss 17 ist mit einer HWL-Leitung 37 verbunden. Über diese externe HWL-Leitung 37 ist der HWL-Druckanschluss 17 mit der Dosiereinheit 4 verbunden. Über die HWL-Leitung 19 ist der HWL-Sauganschluss 16 der Pumpeinheit 3 mit einem Tank 21 der HWL verbunden.

Über eine weitere HWL-Leitung 22 ist die Dosiereinheit 4 mit dem Tank 21 verbunden, so dass sich mit dem Fluss über eine Rücklaufblende 23 in der Dosiereinheit 4 ein Kreislauf bildet.

Die Pumpeinheit 3 weist zwei Kühlwasseranschlüsse 24, 25 auf. Diese beiden Kühlwasseranschlüsse 24, 25 führen an die beiden Enden eines Kühlkanals, der in das Gehäuse 11 eingearbeitet ist. Da die beiden Kühlwasseranschlüsse 24, 25 andererseits in einen Kühlwasserkreislauf 26 des Dieselmotors 2 geschaltet sind, kann somit die Pumpeinheit 3 durch das heiße Kühlwasser vom Kühlwasserkreislauf 26 aufgetaut bzw. in betriebswarmer Temperatur gehalten werden.

Die Dosiereinheit 4 umfasst das elektromagnetische Dosierventil 27. Dieses elektromagnetische Dosierventil 27 weist einen Elektromagneten 28 mit einem Anker 29 auf, der eine Schraubendruckfeder 30 gegen deren Federkraft zusammendrücken kann, so dass der HWL-Druck eine Nadel 31 in die geöffnete Stellung schieben kann. Wird der Elektromagnet 28 nicht über seine Anschlüsse 32 bestromt, so drückt die Schraubendruckfeder 30 die Nadel 31 wieder gegen einen Ventilsitz 33 in eine geschlossene Stellung. Die Nadel 31 ist dabei relativ lang in einem Kühlkanal 34 angeordnet, der den Kreislauf zwischen zwei Dosiereinheitanschlüssen 35, 36 schließt. Diese Dosiereinheitanschlüsse 35, 36 sind dazu an den HWL-Leitungen 22, 37 angeschlossen. Wird die HWL im bestromten Zustand des Elektromagneten 28 durch eine zentrale Öffnung im Ventilsitz 33 hindurch gelassen, so wird die HWL durch eine Zerstäuberdüse geleitet. Diese Zerstäuberdüse ist als Dralldüse mit Düsenscheiben ausgeführt. Durch deren Formgebung erfährt die ausströmende HWL einen Drall, der die HWL beim Austritt zerstäubt.

Eingedüst wird die HWL in einen Bereich des Abgasstranges 1, der vor einem Katalysator 38 liegt.

Im Bereich der HWL-Leitung 37 ist der Druck und die Temperatur der Abgasnachbehandlungseinrichtung mittels eines nicht näher dargestellten Druck- und Temperatursensors ermittelbar.

Die Dosiereinheit 4 weist im Bereich des Dosiereinheitanschlusses 36 die Rücklaufblende 23 auf. Über diese Rücklaufblende 36 wird die ständige Durchströmung der Dosiereinheit 4 mit HWL sichergestellt. Dadurch wird zum einen die Temperatur der Dosiereinheit 4 niedrig gehalten. Zum anderen wird beim Ausschalten der Stromversorgung der Druck in der Abgasnachbehandlungseinrichtung auf Tankdruck abgebaut, ohne dass dafür Energie zum Öffnen eines Ventils notwendig ist.

Alle Komponenten der Abgasnachbehandlungseinrichtung sind so ausgeführt, dass ein Einfrieren der drucklosen HWL nicht zu Beschädigungen führt.

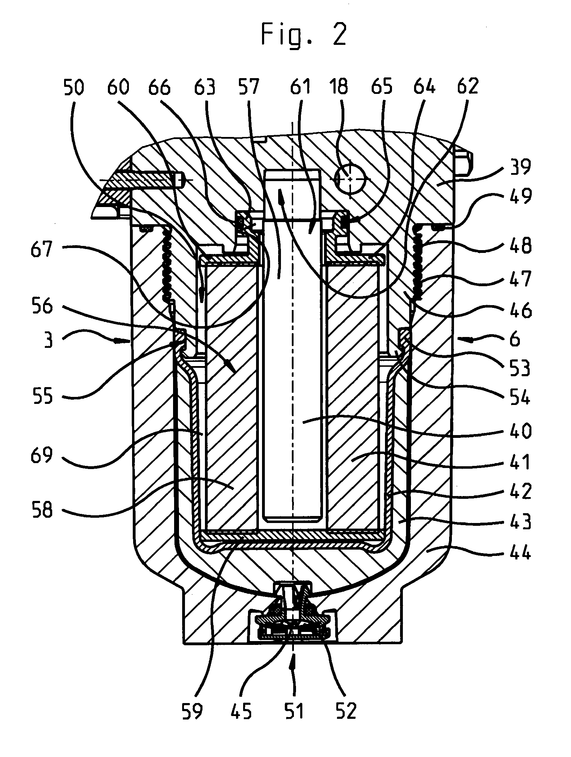

Fig. 2 zeigt die auch als Versorgungseinheit bezeichnete Pumpeneinheit 3 im Einbaubereich des Druckfilters 6. Dieser Druckfilter 6 weist ein Pumpenanschlussgehäuse 39, einen als Einpressbolzen 40 ausgeführten Zapfen, ein Filterelement 41, eine Elastomermembran 42, einen Frostausgleichsschaum 43, ein Filtergehäuse 44, und eine Entlüftungsmembran 45 auf.

Das Pumpenanschlussgehäuse 39 ist aus Aluminium gefertigt. Es weist ein Aufnahmeteil mit einem hülsenförmigen Bereich 46 auf. An diesem hülsenförmigen Bereich 46 ist ein Außengewinde 47 vorgesehen. Auf dieses Außengewinde 47 ist das Filtergehäuse 44 aufgeschraubt. Dazu ist das Filtergehäuse 44 glockenförmig. Innenseitig des aufgeschraubten Bereichs weist das Filtergehäuse 44 ein in das Außengewinde 47 eingeschraubtes Innengewinde 48 auf. Dabei drückt das glockenförmige Filtergehäuse 44 ein ringförmiges Dichtelement 49 gegen das Pumpengehäuse 39. Damit ist der Innenraum 50 innerhalb des Filtergehäuses 44 an sich dicht abgeschlossen, wobei jedoch ein Luftaustausch über die Entlüftungsmembran 45 erfolgt, die in einem Belüftungselement 51 angeordnet ist. Das Belüftungselement 51 ist dabei in eine trichterförmige Öffnung 52 in einem Glockenboden 53 des Filtergehäuses 44 eingerastet.

In das Filtergehäuse 44 ist der Frostsausgleichsschaum 43 eingesetzt. Der Frostausgleichsschaum 43 hat ebenfalls eine korrespondierende Glockenform. Innerhalb dieses Frostausgleichsschaums 43 ist die topfförmige Elastomermembran 42 eingesetzt. Die obere Kante dieser Elastomermembran 42 ist mit einer Wulst 53 versehenen. Diese Wulst 53 ist über eine ringförmig umlaufende Rastnase 54 des hülsenförmigen Bereichs 46 geschoben und in eine dahinter liegende Ringnut 55 eingesetzt. Die Wulst 53 wird vom hülsenförmigen Bereich 46 mit radialem Druck gegen das Filtergehäuse 44 gespannt. In dem sich innerhalb des hülsenförmigen Bereichs 46 und der Elastomermembran 42 bildenden Innenraum 56 ist das Filterelement 41 eingesetzt. Dieses Filterelement 41 weist eine zentrale Ausnehmung 57 auf. Innerhalb dieser Ausnehmung 57 erstreckt sich der Einpressbolzen 40, dessen eines Ende in das Pumpenanschlussgehäuse 39 gepresst ist.

Das Filterelement 41 weist einen Papierfilter 58 auf, der von einem Deckel 59 bodenseitig abgeschlossen ist. Ferner umfasst das Filterelement 41 einen Abschlussring 60, der den Papierfilter 58 auf der dem Deckel 59 gegenüber liegenden Seite abschließt. Dabei ragt der Einpressbolzen 40 durch eine zentrale Ausnehmung 61 des Abschlussrings 60 hindurch bis zu einer Sacklochbohrung 62 innerhalb des Pumpenanschlussgehäuses 39, in der der Einpressbolzen 40 eingepresst ist. Der Abschlussring 60 ist auf dessen dem Pumpenanschlussgehäuse 39 abgewandter Seite mit einer Dichthülse 63 versehen. Diese Dichthülse 63 ist einteilig mit einem scheibenförmigen Bereich 64 des Abschlussrings 60 ausgeführt. Der Abschlussring 60 ist an dessen dem Pumpenanschlussgehäuse 39 zugewandten Ende mit einer umfangsmäßigen Ringnut 65 versehen, in die ein O-Ring 66 eingesetzt ist. Die Dichthülse 63 ist in eine Ausnehmung 67 des Pumpenanschlussgehäuses 39 eingesetzt, so das der O-Ring 66 gegenüber der Innenwand 68 dieser Ausnehmung 67 abdichtet.

Dabei wird die HWL über den Druckkanal 18 und die zentrale Ausnehmung 61 in den Innenraum 57 innerhalb des Papierfilters 58 geleitet. Von dort wird die HWL unter dem Betriebsdruck der Pumpe 5 von bis zu 10 bar durch den Papierfilter 58 gedrückt. Damit gelangt die HWL in einen Ringraum 69, der radial innen durch den Papierfilter 58 und radial außen durch den hülsenförmigen Bereich 46 und die Elastomermembran 42 begrenzt wird. Aus diesem Ringraum 69 wird die HWL durch einen in Fig. 1 symbolisch ersichtlichen Kanal 70 im Pumpenanschlussgehäuse 39 heraus geleitet.

Nach Abstellen des Dieselmotors 2 - ggfs. auch im Notaus oder bei Stromausfall - verbleibt HWL im Ringraum 69, die bei Außentemperaturen unterhalb des Gefrierpunktes von der HWL gefriert. Mit dem Übergang vom flüssigen zum festen Aggregatzustand geht eine Ausdehnung bei sehr hohem Druck einher.

Da der Saugkanal 15, der Druckkanal 18 und der Kanal 70 infolge des geringen Leitungsquerschnittes zeitlich vor dem Innenraum 50 zufrieren, kann unter Umständen zusätzlicher Druck im Innenraum 50 entstehen.

Dieser hohe Druck drückt auf die relativ dicke Elastomermembran 42, die aus HNBR besteht, um im Falle einer Fehlbetankung mit Dieselkraftstoff anstelle HWL den Schaden geringstmöglich zu halten. Diese somit relativ leicht elastisch verformbare Elastomermembran 42 gibt den Druck an den Frostausgleichsschaum 43 weiter. Der Frostausgleichsschaum 43 wird zusammengepresst, wenn der Druck einen Grenzwert von 10 bar überschreitet. Dabei tritt an sich noch kein bzw. kaum Gas aus dem Belüftungselement 51 aus. Der Frostausgleichsschaum 43 ist nämlich ein geschlossenporiger Schaum, so dass lediglich der Druck innerhalb der Schaumbläschen erhöht wird. Jedoch kommt es grundsätzlich mit der Lebensdauer des Schaums zu einem Gasdurchtritt durch die Wände der Schaumbläschen. Das Belüftungselement 51 selbst ist gasdurchlässig. Aber selbst die Elastomermembran 42 ist je nach Molekülgröße des Gases in sehr geringem Maße gasdurchlässig. Infolge des Belüftungselementes 51 kann jedoch atmosphärische Luft zum Frostausgleichsschaum 43 durchtreten und so einen ggfs. über die Jahre einen durch die Elastomermembran 42 erfolgenden Gasverlust kompensieren.

Das Pumpenanschlussgehäuse muss nicht aus Aluminium gefertigt sein. Ebenso ist Edelstahl oder ein HWL-beständiger Kunststoff machbar.

Das Filtergehäuse steht nicht in Kontakt mit der HWL, so dass hier beim Werkstoff ein besonders großer Gestaltungsspielraum existiert. Insbesondere sind Kunststoffe möglich.

Das Filterelement muss nicht als Papierfilter ausgeführt sein. Es sind je nach Empfindlichkeit der Dosiereinheit auch andere Materialien möglich.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

### Bezugszeichenliste

- 1: Abgasstrom
- 2: Dieselmotor
- 3: Pumpeneinheit
- 4: Dosiereinheit
- 5: Pumpe
- 6: Druckfilter
- 7: Steuerungseinheit
- 8: Elektromotor
- 9: Excentergetriebe
- 10: Membran
- 11: Gehäuse
- 12: Rückschlagventil
- 13: Rückschlagventil
- 14: Druckraum
- 15: Saugkanal
- 16: Sauganschluss
- 17: HWL-Druckanschluss
- 18: Druckkanal
- 19: HWL-Leitung
- 20: -
- 21: Tank
- 22: HWL-Leitung
- 23: Rücklaufblende
- 24: Kühlwasseranschluss
- 25: Kühlwasseranschluss
- 26: Kühlwasserkreislauf
- 27: Dosierventil
- 28: Elektromagnet
- 29: Anker
- 30: Schraubendruckfeder
- 31: Nadel
- 32: Anschlüsse
- 33: Ventilsitz
- 34: Kühlmittelkanal
- 35: Dosiereinheitanschluss
- 36: Dosiereinheitanschluss
- 37: HWL-Leitung
- 38: Katalysator
- 39: Pumpenanschlussgehäuse
- 40: Einpressbolzen
- 41: Filterelement
- 42: Elastomermembran
- 43: Frostausgleichsschaum
- 44: Filtergehäuse
- 45: Entlüftungsmembran
- 46: hülsenförmiger Bereich
- 47: Außengewinde
- 48: Innengewinde
- 49: Dichtelement
- 50: Innenraum
- 51: Belüftungselement
- 52: Öffnung
- 53: Wulst
- 54: Rastnasen
- 55: Ringnut
- 56: Innenraum
- 57: Ausnehmung
- 58: Papierfilter
- 59: Deckel
- 60: Abschlussring
- 61: Ausnehmung
- 62: Sacklochbohrung
- 63: Dichthülse
- 64: Scheibenförmiger Bereich
- 65: Ringnut
- 66: O-Ring
- 67: Ausnehmung
- 68: Innenwand
- 69: Ringraum

## Patentansprüche

1. SCR-Abgasnachbehandlungseinrichtung zur Einspritzung einer Harnstoff-Wasser-Lösung in einen Abgasstrang (1), umfassend:
- eine im Bereich eines Innenraumes (50) der SCR-Abgasnachbehandlungseinrichtung liegende Komponente der SCR-Abgasnachbehandlungseinrichtung, und
- eine den Innenraum (50) begrenzende Elastomermembran (42), die in einen Frostausgleichsschaum (43) eingebettet ist.

2. SCR-Abgasnachbehandlungseinrichtung nach Patentanspruch 1,
**dadurch gekennzeichnet, dass** die Elastomermembran (42) gemeinsam mit dem Frostausgleichsschaum (43) eine solche Steifigkeit aufweist, dass bis zu einem Druck von 10 bar eine Volumenverringerung des Frostausgleichsschaumes um mehr als 10% verhindert ist.

3. SCR-Abgasnachbehandlungseinrichtung nach einem der vorhergehenden Patentansprüche,
**dadurch gekennzeichnet, dass** ein Belüftungselement (51) vorgesehen ist, welches bei Volumenänderungen des Frostausgleichsschaumes (43) einen Druckausgleich zulässt.

4. SCR-Abgasnachbehandlungseinrichtung nach Patentanspruch 3,
**dadurch gekennzeichnet, dass** das Belüftungselement (51) ein gasdurchlässiges und wasserundurchlässiges Trennelement umfasst.

5. SCR-Abgasnachbehandlungseinrichtung nach einem der vorhergehenden Patentansprüche,
**dadurch gekennzeichnet, dass** die Komponente ein Filterelement zur Reinigung der Harnstoff-Wasser-Lösung ist.

6. SCR-Abgasnachbehandlungseinrichtung nach Patentanspruch 5,
**dadurch gekennzeichnet, dass** innerhalb des Filterelementes ein Zapfen vorgesehen ist.

7. SCR-Abgasnachbehandlungseinrichtung nach Patentanspruch 5,
**dadurch gekennzeichnet, dass** das Filterelement in ein steifes Aufnahmeteil (46) eingesetzt ist, in welches die Elastomermembran (42) dicht eingesetzt ist.

8. SCR-Abgasnachbehandlungseinrichtung nach Patentanspruch 7,
**dadurch gekennzeichnet, dass** am Aufnahmeteil ein Filtergehäuse (44) befestigt ist, welches eine dichtende Wulst (53) der Elastomermembran gegen das Aufnahmeteil drückt.

9. SCR-Abgasnachbehandlungseinrichtung nach Patentanspruch 7,
**dadurch gekennzeichnet, dass** das Aufnahmeteil mittels eines Dichtelementes (49) gegen das Filtergehäuse (44) abgedichtet ist.

## Claims

1. SCR exhaust gas aftertreatment device for injecting a urea-water solution into an exhaust gas line (1), comprising:
a component of the SCR exhaust gas aftertreatment device arranged in an area of an internal space (50) of the SCR exhaust gas aftertreatment device, and
an elastomer membrane (42) bounding the internal space (50) and embedded in a frost equalization foam (43).

2. SCR exhaust gas aftertreatment device according to claim 1,
**characterized in that** the elastomer membrane (42) together with the frost equalization foam (43) is designed to be sufficiently rigid so as to prevent a volume decrease greater than 10% at a pressure of up to 10 bars.

3. SCR exhaust gas aftertreatment device according to any of the preceding claims,
**characterized in that** a ventilation element (51) is provided, which allows a pressure equalization upon changes in volume of the frost equalization foam (43).

4. SCR exhaust gas aftertreatment device according to claim 3,
**characterized in that** the ventilation element (51) comprises a gas-permeable and water-impermeable separating element.

5. SCR exhaust gas aftertreatment device according to any of the preceding claims,
**characterized in that** the component is a filter element for cleaning of the urea-water solution.

6. SCR exhaust gas aftertreatment device according to claim 5,
**characterized in that** a plug is arranged inside the filter element.

7. SCR exhaust gas aftertreatment device according to claim 5,
**characterized in that** the filter element is installed in a rigid receiving part (46), in which the elastomer membrane (42) is tightly installed.

8. SCR exhaust gas aftertreatment device according to claim 7,
**characterized in that** a filter housing (44) is fastened on the receiving part, which presses a sealing bulge (53) of the elastomer membrane against the receiving part.

9. SCR exhaust gas aftertreatment device according to claim 7,
**characterized in that** the receiving part is sealed off against the filter housing (44) by means of a sealing element (49).

## Revendications

1. Dispositif de post-traitement des gaz d'échappement par réduction catalytique sélective (SCR), permettant l'injection d'une solution acqueuse d'urée dans une ligne d'échappement (1) et comprenant :
- un composant du dispositif de post-traitement des gaz d'échappement par SCR situé dans la zone d'un espace intérieur (50) dudit dispositif, et
- une membrane élastomère (42) délimitant ledit espace intérieur (50), qui est incorporée dans une mousse de compensation de gel (43).

2. Dispositif de post-traitement des gaz d'échappement par SCR selon la revendication 1,
**caractérisé en ce que** la membrane élastomère (42) présente conjointement avec la mousse de compensation de gel (43) une rigidité telle qu'une diminution volumique de plus de 10 % de la mousse de compensation de gel est empêchée jusqu'à une pression de 10 bar.

3. Dispositif de post-traitement des gaz d'échappement par SCR selon l'une des revendications précédentes,
**caractérisé en ce qu'**il est prévu un élément de ventilation (51), lequel permet une compensation de pression lors de modifications volumiques de la mousse de compensation de gel (43).

4. Dispositif de post-traitement des gaz d'échappement par SCR selon la revendication 3,
**caractérisé en ce que** l'élément de ventilation (51) comprend un élément de séparation perméable au gaz et imperméable à l'eau.

5. Dispositif de post-traitement des gaz d'échappement par SCR selon l'une des revendications précédentes,
**caractérisé en ce que** le composant est constitué par un élément filtrant servant à l'épuration de la solution acqueuse d'urée.

6. Dispositif de post-traitement des gaz d'échappement par SCR selon la revendication 5,
**caractérisé en ce qu'**un bouchon est prévu à l'intérieur de l'élément filtrant.

7. Dispositif de post-traitement des gaz d'échappement par SCR selon la revendication 5,
**caractérisé en ce que** l'élément filtrant est placé dans un logement rigide (46) dans lequel la membrane élastomère (42) est incorporée de manière étanche.

8. Dispositif de post-traitement des gaz d'échappement par SCR selon la revendication 7,
**caractérisé en ce qu'**un boîtier de filtre (44) est fixé au logement et presse contre ce dernier un bourrelet d'étanchéité (53) de la membrane élastomère.

9. Dispositif de post-traitement des gaz d'échappement par SCR selon la revendication 7,
**caractérisé en ce que** l'étanchéité entre le logement et le boîtier de filtre (44) est assurée au moyen d'un élément d'étanchéité.
